# EUROPÄISCHE PATENTSCHRIFT

(11) **EP 2 770 309 B1**
(45) Veröffentlichungstag und Bekanntmachung des Hinweises auf die Patenterteilung: **22.07.2015**
(21) Anmeldenummer: 14155846.0
(22) Anmeldetag: 19.02.2014
(51) Int. Cl.: G01G 21/28

(54) **Waage**
Scale
Balance

(30) Priorität: 22.02.2013 DE 102013003873
(43) Veröffentlichungstag der Anmeldung: 27.08.2014
(73) Patentinhaber: Bizerba GmbH & Co. KG, 72336 Balingen (DE)
(72) Erfinder: Schlaich, Heinz, 72351 Geislingen (DE); Dietmann, Bernhard, 72415 Grosselfingen (DE)
(74) Vertreter: Louis Pöhlau Lohrentz

(56) Entgegenhaltungen:
- EP-A1- 2 492 653

## Beschreibung

Die Erfindung betrifft eine Waage nach dem Oberbegriff des Anspruchs 1.

Eine solche Waage ist aus der DE 10 2011 012 195 A1 bekannt. Dort ist eine Waage für eine Ladentheke mit einer Reinigungsposition und einer Wiegeposition gezeigt, die innerhalb einer Schale angeordnet ist. Die Wägezelle ist in einer Kulissenführung über seitlich zugängliche Verschraubungen geführt. Für eine Wartung der Waage müssen diese Verschraubungen zugänglich sein. Nachteilig ist, dass eine Wartung oder ein Tausch der Waage bei beengten Platzverhältnissen relativ schwierig ist.

Aus der DE 21 61 308 ist eine Ladenwaage bekannt, die auf einer erweiterten Stellfläche einer Kühltheke platziert werden kann.

Der Erfindung liegt die Aufgabe zugrunde eine Waage zu schaffen, die zur Verwendung an einer Verkaufstheke geeignet ist und dabei auch bei beengten Platzverhältnissen einfach zu warten ist.

Diese Aufgabe wird erfindungsgemäß durch eine Waage gemäß den Merkmalen des Oberbegriffs des Anspruchs 1 gelöst.

Die Wägezelle ist in einer Reinigungsposition entnehmbar, indem die Kulissenführung eine Kulissenbahn mit einer Öffnung aufweist. Durch diese Öffnung kann die Wägezelle aus der Schale entnommen werden, ohne dass ein seitlicher Zugang zu der Schale vorhanden sein muss oder zusätzliche Verschraubungen gelöst werden müssen. Damit ist es möglich, die Schale der Waage auch bei beengten Platzverhältnissen wie eng benachbarten Geräten oder Wänden anzuordnen. Auch ein weitest gehender Einbau der Schale in eine Vertiefung oder Aussparung wie beispielsweise in eine Verkaufstheke oder eine Tischplatte eines Verkaufsstandes ist so möglich, da kein seitlicher Zugang mehr erforderlich ist.

Um eine versehentliche Entnahme der Wägezelle zu verhindern kann es in einer Ausführung vorgesehen sein, dass eine Verriegelungsvorrichtung die Wägezelle in der Wiegeposition gegen Entnehmen sichert. Erst nachdem die Wägezelle durch verschieben in eine Reinigungsposition verbracht wird kann die Verriegelungsvorrichtung entsichert und dann die Wägezelle entnommen werden.

Von Vorteil ist, wenn die Wägezelle in der Reinigungsposition um eine Schwenkachse schwenkbar gelagert ist. So kann die Wägezelle zum Reinigen aufgeklappt werden und ist einfach zugänglich.

Weiter kann vorgesehen sein, dass die Verriegelungsvorrichtung mit der Schwenkachse so zusammen wirkt, dass diese nur in einer vorbestimmten aufgeschwenkten Winkelstellung der Wägezelle, vorzugsweise in 90° Stellung, entriegelbar ist.

Dazu kann ein Schwenkriegel vorgesehen sein, der mit der Schwenkachse zusammenwirkt und eine schlüssellochförmige Aussparung aufweist. Die schlüssellochförmige Aussparung kann einen runden Abschnitt zum drehbaren Lagern einer Drehscheibe und einen davon abzweigenden geraden Abschnitt umfassen, dessen lichte Breite kleiner ist als der lichte Durchmesser des runden Abschnitts. Weiter weist die Drehscheibe zwei Abschnitte mit runder Kontur und zwei Abschnitte mit gerader Kontur auf. Die Abschnitte mit gerader Kontur sind einander gegenüberliegend mit einem solchen Abstand angeordnet, dass sie entlang des geraden Abschnitts, oder der gerade Abschnitt entlang der Drehscheibe, linear verschiebbar sind.

Die Ausrichtung des geraden Abschnitts relativ zu der Drehscheibe bestimmt die Winkelstellung bei der eine Entriegelung möglich ist.

Somit kann die Wägezelle aus der Schale bei einer bestimmten Winkelstellung einfach, vorzugsweise werkzeuglos, entnommen oder auch eingesetzt werden, um eine Wartung oder einen Tausch durchzuführen.

In einer Ausführung ist vorgesehen, dass die Schale mit einer Unterlage oder einem Unterbau, vorzugsweise einer Tischoberfläche oder einer Thekenoberfläche mechanisch fest verbunden ist. Die Verbindung kann durch Verschrauben oder Verkleben oder auch durch eine manuell lösbare Rastverbindung oder Klemmverbindung erfolgen.

Ebenso kann in einer Ausführung vorgesehen sein, dass die Schale in einer Aussparung einer Unterlage oder eines Unterbaus vorzugsweise vollständig oder zumindest teilweise integriert angeordnet ist. Vorzugsweise ist die Seitenwand der Schale so ausgeführt, dass sie gegenüber der Oberfläche der Unterlage erhöht ist, und somit einen Rand ausbildet. Dadurch wird zum einen die Verschmutzung der Wägezelle reduziert, da Schmutz von der Oberfläche der Unterlage nicht direkt in das Innere der Schale gelangen kann. Zum anderen wird ein möglicher Kraftschluss des Wiegeguts mit der Unterlage verhindert, da dieses um den Rand erhöht über der Oberfläche der Unterlage angeordnet ist.

Eine Anwendung der Waage ist insbesondere im Frischeverkauf von Lebensmitteln wie Fleisch, Wurst oder Käse vorgesehen. Durch die flache Bauform in Verbindung mit der reinigungsfreundlichen Ausführung kann die Waage vor allem im Thekenbereich an oder in einer Verkaufstheke eingesetzt werden. Die Anzeige von Wägedaten und oder der Druck eines Bons kann dabei über örtlich von der Waage abgesetzte Module, insbesondere Bedienterminals oder Drucker erfolgen, die mit der Waage über eine Kabelverbindung oder Funkverbindung verbunden sind.

Weitere Ausführungsbeispiele sind in den Figuren dargestellt und der dazugehörenden Beschreibung beschrieben.

Es zeigen,
- Figur 1:: Eine perspektivische Ansicht der Waage in funktionsbereiter Position.
- Figur 2:: Eine Seitenansicht der Waage in funktionsbereiter Position mit partiell durchbrochen dargestellter Seitenwand.
- Figur 3:: Eine Seitenansicht der Waage in einer Reinigungsposition mit geschlossener Verriegelungsvorrichtung mit partiell durchbrochen dargestellter Seitenwand.
- Figur 4:: Eine perspektivische Ansicht der Darstellung aus Figur 3 mit durchgehend dargestellter Seitenwand.
- Figur 5:: Eine Seitenansicht der Waage mit entnommener Wägezelle, geöffenter Verriegelungsvorrichtung und partiell durchbrochen dargestellter Seitenwand.
- Figur 6:: Eine perspektivische Ansicht der Darstellung aus Figur 5 mit durchgehend dargestellter Seitenwand.

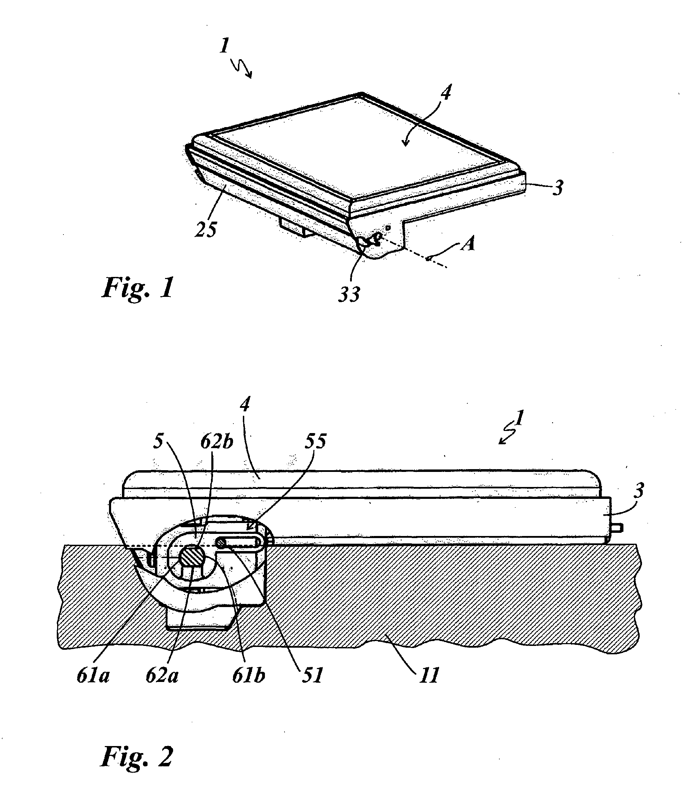

In den **Figuren 1 und 2** ist eine Waage 1 in der Wiegeposition dargestellt. Sie ist mit einem Thekenbrett 11 als Unterlage fest verbunden. Die Waage 1 weist als Gehäuse eine Schale 3 auf, die in einer Aussparung des Thekenbretts 11 aufgenommen ist. Die Schale 3 wird nach oben hin durch eine Lastplatte 4 abgeschlossen. Die Lastplatte 4 liegt auf einem Lastverteilträger 26 auf, der die Kraft von der Lastplatte gleichmäßig aufnimmt und an die Wägezelle 2 weiterleitet. Auf die Lastplatte 4 kann Wiegegut zum Wiegen aufgelegt werden. An ihrer Oberseite weist die Lastplatte 4 eine eingefräste Saftrille auf, die aus dem Wiegegut austretenden Saft auffängt und so verhindert, dass dieser in die Schale 3 fließt. Eine Anzeige des Gewichts und /oder Steuerung der Waage 1 erfolgt an einer nicht dargestellten, örtlich abgesetzten Bedien- und Anzeigeeinrichtung, welche über eine Kabelverbindung mit der Waage 1 verbunden ist.

Die Lastplatte 4 ist abnehmbar und kann als massive Holzplatte, Kunststoffplatte oder als Marmorplatte ausgebildet sein. Damit kann unter gestalterischen Gesichtspunkten die jeweils passende Lastplatte verwendet werden. Es ist auch vorgesehen, aus einem Sortiment verschiedene gegeneinander austauschbare Lastplatten 4 einzusetzen. Das unterschiedliche Gewicht der einzelnen Lastplatten wird über eine Tarafunktion an der Waage ausgeglichen.

Die Schale 3 weist einen geschlossenen Boden und drei Seitenwände auf. Der hintere Teil der Schale 3 wird durch die Wägezelle 2 und eine schwenkbare Blende 25 abgeschlossen. Beim Verschwenken der Waage 1 in der Reinigungsposition wird die Blende 25 zusammen mit der Wägezelle 2 verschwenkt.

In ihren einender gegenüberliegenden Seitenwänden weist die Schale 3 jeweils eine Kulissenführung 33 auf, welche die Schwenkachse A der Wägezelle 2 führen. Zwei Führungszapfen, die beiderseits der Wägezelle 2 jeweils am Ende der Schwenkachse A angeordnet sind, greifen in die Kulissenführungen 33 ein. Über ein Halteprofil 25 der Wägezelle 2 sind die beiden Führungszapfen miteinander verbunden. Um die Wägezelle 3 entnehmen zu können weist die Kulissenführung 33 eine nach außen geöffnete Kulissenbahn auf.

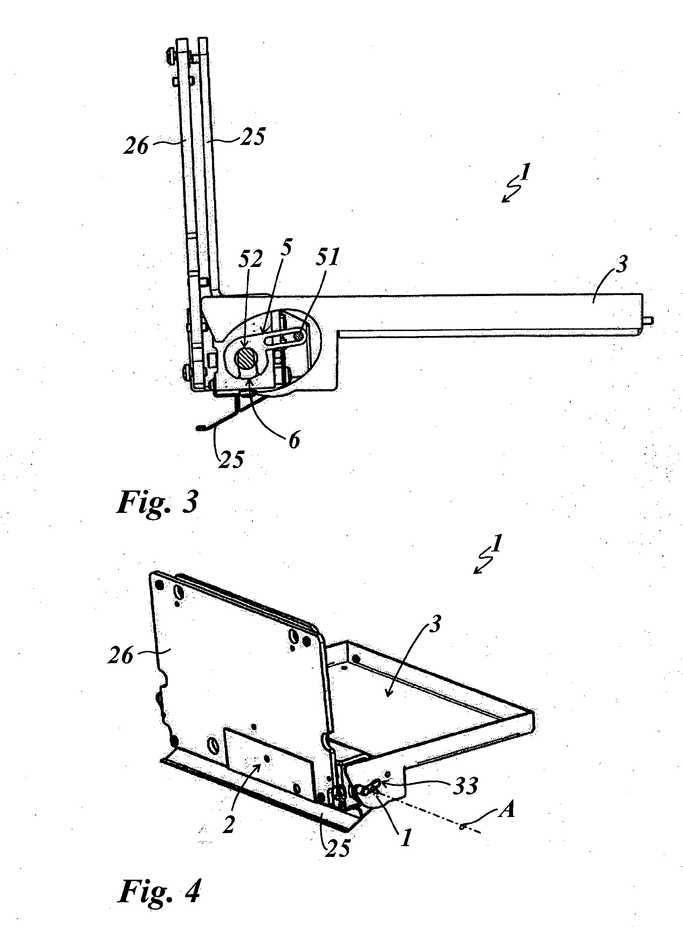

In den **Figuren 3 und 4** ist die Waage in einer Reinigungsposition mit geschlossener Verriegelungsvorrichtung dargestellt.

In der in den Figuren 1 und 2 dargestellten Wiegeposition ist die Waage entlang der Kulissenführung zu dem geschlossenen Ende der Kulissenbahn hin verschoben. Im Unterschied dazu ist in der in den Figuren 3 und 4 dargestellten Reinigungsposition die Waage entlang der Kulissenführung zu dem geöffneten Ende der Kulissenführung 33 hin verschoben.

Die Wägezelle 2 ist zusammen mit dem Halteprofil 25 und der Lastverteilung 26 um die Schwenkachse A nach oben, insbesondere vollständig aus der Schale 3 heraus, verschwenkt, so dass die Innenseite der Schale 3 zu Reinigungszwecken einfach zugänglich ist.

Eine Verriegelungsvorrichtung 55 verhindert das versehentliche Entnehmen der Wägezelle 2. Sie umfasst einen Schwenkriegel 5, der an der Seitenwand der Schale 3 im Bereich der Kulissenführung angeordnet ist. Er ist über einen Bolzen 51 drehbar und verschiebbar gelagert. Der Schwenkriegel 5 wirkt mit einer Drehscheibe 6 zum Ver- und Entriegeln zusammen, die mit der Wägezelle 2 verbunden und auf der Schwenkachse A angeordnet ist.

Der Schwenkriegel 5 weist eine schlüssellochförmige Aussparung 52 auf, die einen runden Abschnitt 53 zum drehbaren Lagern der Drehscheibe 6 und einen davon abzweigenden geraden Abschnitt 54 umfasst. Die lichte Breite des geraden Abschnitts 54 ist kleiner als der lichte Durchmesser des runden Abschnitts 53.

Die Drehscheibe 6 weist zwei Abschnitte mit runder Kontur 61 a und 61 b und zwei Abschnitte mit gerader Kontur 62a und 62b auf. Die Abschnitte mit gerader Kontur 62a und 62b sind einander gegenüberliegend mit einem solchen Abstand angeordnet, dass sie entlang des geraden Abschnitts 54 verschiebbar sind. Je nach Bewegungsablauf kann auch der gerade Abschnitt 54 entlang der Abschnitte mit gerader Kontur 62a und 62b der Drehscheibe 6 verschiebbar sein.

Die Drehscheibe 6 weist zur verbesserten Seitenführung zwei runde Scheiben auf, die beiderseits der Abschnitte mit runder Kontur 61 a und 61 b und der Abschnitte mit gerader Kontur 62a und 62b so angeordnet sind, dass der Schwenkriegel zwischen die beiden Scheiben eingreift. In den Figuren 2 und 3 wurden die Seitenführungsscheiben zur besseren Darstellung der einzelnen Abschnitte der Drehscheibe 6 weggelassen.

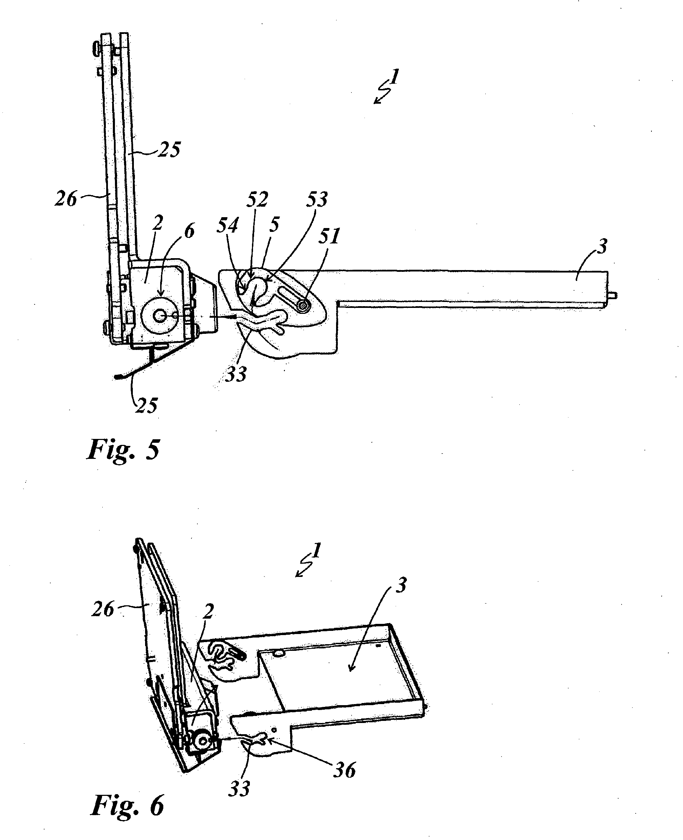

Zum Entnehmen der Waage 1 in der Reinigungsposition wird die Wägezelle 2 aus der Schale 3 heraus in eine aufrechte Position geschwenkt, wie in den **Figuren 5 und 6** dargestellt. Dann kann der Schwenkriegel 5 der Verriegelungsvorrichtung 55 zu beiden Seiten der Schwenkachse A angehoben werden um die Drehscheibe 6 bzw. die Schwenkachse A freizugeben. Anschließend kann die Wägezelle 2, welche zusammen mit der Lastverteilung 26 und dem Halteprofil 25 eine Baueinheit bildet, entlang der Kulissenführung 33 zu deren Öffnung hin verschoben und dort aus der Schale 3 komplett entnommen werden.

Mit sinngemäß entgegengesetztem Bewegungsablauf kann die Wägezelle 2, beispielsweise nach erfolgter Wartung, wieder in die Schale 3 eingesetzt werden.

## Patentansprüche

1. Waage, insbesondere Ladenwaage, mit einer Wägezelle (2) zum Erfassen des Gewichts von Wiegegut und einer mit dieser zusammenwirkenden und abnehmbaren Lastplatte (4) zum Auflegen von Wiegegut, wobei die Wägezelle (2) innerhalb einer Schale (3) angeordnet ist und über eine Kulissenführung (5) von einer Wiegeposition in eine Reinigungsposition verbringbar ist,
**dadurch gekennzeichnet,**
**dass** die Wägezelle (2) in einer Reinigungsposition entnehmbar ist, indem eine Kulissenbahn (33) der Kulissenführung (36) eine Öffnung aufweist.

2. Waage nach Anspruch 1,
**dadurch gekennzeichnet,**
**dass** die Wägezelle (2) in der Wiegeposition über eine manuell betätigbare Verriegelungsvorrichtung (55) gegen Entnehmen gesichert ist.

3. Waage nach Anspruch 1 oder 2,
**dadurch gekennzeichnet,**
**dass** die Wägezelle (2) in der Reinigungsposition um eine Schwenkachse (A) schwenkbar gelagert ist.

4. Waage nach Anspruch 3,
**dadurch gekennzeichnet,**
**dass** die Verriegelungsvorrichtung (55) über einen Schwenkriegel (5) mit der Schwenkachse (A) zum Sichern und Entsichern der Wägezelle (2) zusammenwirkt.

5. Waage nach Anspruch 3,
**dadurch gekennzeichnet,**
**dass** die Wägezelle (2) über einen Führungszapfen in der Kulissenführung gelagert ist und die Schwenkachse (A) durch den Führungszapfen verläuft.

6. Waage nach einem der vorhergehenden Ansprüche,
**dadurch gekennzeichnet,**
**dass** die Verriegelungsvorrichtung (55) einen mit der Schale verbundenen Schwenkriegel (5) aufweist, der mit einer Drehscheibe (6) der Schwenkachse (A) zusammenwirkt.

7. Waage nach Anspruch 4,
**dadurch gekennzeichnet,**
**dass** der Schwenkriegel (5) eine schlüssellochförmige Aussparung (52) aufweist, die einen runden Abschnitt (53) zum drehbaren Lagern der Drehscheibe (6) und einen davon abzweigenden geraden Abschnitt (54) umfasst, dessen lichte Breite kleiner ist als der lichte Durchmesser des runden Abschnitts.

8. Waage nach Anspruch 7,
**dadurch gekennzeichnet,**
**dass** der gerade Abschnitt (54) auf der dem runden Abschnitt (53) gegenüberliegenden Seite geöffnet ist.

9. Waage nach einem der Ansprüche 6 bis 8,
**dadurch gekennzeichnet,**
**dass** die Drehscheibe (6) zwei Abschnitte mit runder Kontur (61 a, 61 b) und zwei Abschnitte mit gerader Kontur (62a, 62b) aufweist und die Abschnitte mit gerader Kontur (62a, 62b) einander gegenüberliegend mit einem solchen Abstand angeordnet sind, dass sie entlang des geraden Abschnitts (54), oder der gerade Abschnitt (54) entlang des Abschnitts der Drehscheibe mit gerader Kontur (62a, 62b), verschiebbar sind.

10. Waage nach einem der Ansprüche 6 bis 9,
**dadurch gekennzeichnet,**
**dass** der Schwenkriegel (5) an der Schale (3) verschiebbar und schwenkbar gelagert ist.

11. Waage nach einem der vorhergehenden Ansprüche,
**dadurch gekennzeichnet,**
**dass** zwei gegenüberliegende Kulissenführungen (33) vorgesehen sind, wobei je eine Kulissenführung in einer Seitenwand der Schale (3) angeordnet ist.

12. Waage nach einem der vorhergehenden Ansprüche,
**dadurch gekennzeichnet,**
**dass** die Schale (3) zumindest teilweise innerhalb einer Aussparung einer ebenen Fläche (11), vorzugsweise einer Verkaufstheke oder einem Verkaufstisch, angeordnet ist.

## Claims

1. Scale, in particular loading scale, having a weighing cell (2) for recording the weight of items to be weighed and having a removable load plate (4) that interacts therewith for placing items to be weighed, wherein the weighing cell (2) is arranged within a shell (3) and is able to be brought from a weighing position into a cleaning position via a slotted guide (5),
**characterised in that**
the weighing cell (2) is able to be removed in a cleaning position by a slotted track (33) of the slotted guide (36) having an opening.

2. Scale according to claim 1,
**characterised in that**
the weighing cell (2) is secured from being removed in the weighing position by a manually actuatable locking device (55).

3. Scale according to claim 1 or 2,
**characterised in that**
in the cleaning position, the weighing cell (2) is mounted to pivot around a pivot axis (A).

4. Scale according to claim 3,
**characterised in that**
the locking device (55) interacts with the pivot axis (A) for securing and releasing the weighing cell (2) via a pivot bolt (5).

5. Scale according to claim 3,
**characterised in that**
the weighing cell (2) is mounted in the slotted guide by a guiding pin and the pivot axis (A) runs through the guiding pin.

6. Scale according to one of the preceding claims,
**characterised in that**
the locking device (55) has a pivot bolt (5) that is connected to the shell, said pivot bolt interacting with a hub (6) of the pivot axis (A).

7. Scale according to claim 4,
**characterised in that**
the pivot bolt (5) has a keyhole-shaped recess (52) which comprises a round section (53) for the rotatable mounting of the hub (6) and a straight section (54) that branches off therefrom, the clear width of which is smaller than the clear diameter of the round section.

8. Scale according to claim 7,
**characterised in that**
the straight section (54) is open on the side opposite the round section (53).

9. Scale according to one of claims 6 to 8,
**characterised in that**
the hub (6) has two sections with a round contour (61a, 61b) and two sections with a straight contour (62a, 62b) and the sections with a straight contour (62a, 62b) are arranged opposite each other with such spacing that they are able to be displaced along the straight section (54), or the straight section (54) is able to be displaced along the section of the hub with a straight contour (62a, 62b).

10. Scale according to one of claims 6 to 9,
**characterised in that**
the pivot bolt (5) is mounted for displacement and pivoting on the shell (3).

11. Scale according to one of the preceding claims,
**characterised in that**
two opposing slotted guides (33) are provided, wherein a respective slotted guide is arranged in a side wall of the shell (3).

12. Scale according to one of the preceding claims,
**characterised in that**
the shell (3) is at least partially arranged within a recess of a planar surface (11), preferably a sales counter or a sales table.

## Revendications

1. Balance, en particulier balance de magasin, avec une cellule de pesée (2) pour détecter le poids du produit à peser et une plaque de charge (4) amovible et interagissant avec celle-ci pour le placement du produit à peser, la cellule de pesée (2) étant agencée dans une coque (3) et pouvant être amenée par un guidage coulissant (5) d'une position de pesée à une position de nettoyage,
**caractérisée en ce que**
la cellule de pesée (2) peut être retirée dans une position de nettoyage, dans laquelle une piste de coulissement (33) du guidage coulissant (36) présente une ouverture.

2. Balance selon la revendication 1,
**caractérisée en ce que**
la cellule de pesée (2) est bloquée contre tout retrait dans la position de pesée par un dispositif de verrouillage (55) actionnable manuellement.

3. Balance selon la revendication 1 ou 2,
**caractérisée en ce que**
la cellule de pesée (2) est logée de manière à pouvoir pivoter autour d'un axe de pivotement (A) dans la position de nettoyage.

4. Balance selon la revendication 3,
**caractérisée en ce que**
le dispositif de verrouillage (55) interagit par l'intermédiaire d'un verrou de pivotement (5) avec l'axe de pivotement (A) pour le blocage et le déblocage de la cellule de pesée (2).

5. Balance selon la revendication 3,
**caractérisée en ce que**
la cellule de pesée (2) est logée par le biais d'un tenon de guidage dans le guidage coulissant et l'axe de pivotement (A) s'étend au travers du tenon de guidage.

6. Balance selon l'une quelconque des revendications précédentes,
**caractérisée en ce que**
le dispositif de verrouillage (55) présente un verrou de pivotement (5) relié à la coque, lequel interagit avec un plateau tournant (6) de l'axe de pivotement (A).

7. Balance selon la revendication 4,
**caractérisée en ce que**
le verrou de pivotement (5) présente un évidement (52) en forme de trou de serrure qui comporte une section ronde (53) pour le logement rotatif du plateau tournant (6) et une section (54) droite s'en détachant, dont la largeur intérieure est inférieure au diamètre intérieur de la section ronde.

8. Balance selon la revendication 7,
**caractérisée en ce que**
la section droite (54) est ouverte sur le côté opposé à la section ronde (53).

9. Balance selon l'une quelconque des revendications 6 à 8,
**caractérisée en ce que**
le plateau tournant (6) présente deux sections avec un contour rond (61a, 61b) et deux sections avec un contour droit (62a, 62b) et les sections avec un contour droit (62a, 62b) sont agencées en regard l'une de l'autre à une distance telle qu'elles puissent coulisser le long de la section droite (54) ou que la section droite (54) puisse coulisser le long de la section du plateau tournant avec un contour droit (62a, 62b).

10. Balance selon l'une quelconque des revendications 6 à 9,
**caractérisée en ce que**
le verrou de pivotement (5) est logé de manière à pouvoir coulisser et pivoter sur la coque (3).

11. Balance selon l'une quelconque des revendications précédentes,
**caractérisée en ce que**
deux guidages coulissants en regard l'un de l'autre (33) sont prévus, un guidage coulissant étant agencé respectivement dans une paroi latérale de la coque (3).

12. Balance selon l'une quelconque des revendications précédentes,
**caractérisée en ce que**
la coque (3) est agencée au moins en partie dans un évidement d'une surface plane (11), de préférence un comptoir de vente ou une table de vente.
